# EUROPÄISCHE PATENTSCHRIFT

(11) **EP 3 879 235 B1**
(45) Veröffentlichungstag und Bekanntmachung des Hinweises auf die Patenterteilung: **25.06.2025**
(21) Anmeldenummer: 20163057.1
(22) Anmeldetag: 13.03.2020
(51) Int. Cl.: G01D 11/30, G01D 21/00, G01F 23/284, G01L 19/08, G01S 13/88, H01Q 1/22, H01Q 21/28

(54) **BEFESTIGUNGSVORRICHTUNG FÜR EIN FELDGERÄT**
MOUNTING DEVICE FOR A FIELD UNIT
DISPOSITIF DE FIXATION POUR UN APPAREIL DE TERRAIN

(43) Veröffentlichungstag der Anmeldung: 15.09.2021
(73) Patentinhaber: VEGA Grieshaber KG, 77709 Wolfach (DE)
(72) Erfinder: KRÄMER, Florian, 77796 Mühlenbach (DE); HEIZMANN, Patrick, 77709 Oberwolfach (DE); ALLGAIER, Stefan, 77709 Oberwolfach (DE)
(74) Vertreter: Patentanwälte Bauer Vorberg Kayser

(56) Entgegenhaltungen:
- WO-A1-2012/104713
- DE-A1- 102004 041 857
- DE-A1- 102014 116 674
- DE-A1- 102016 124 981
- US-A- 6 062 095
- US-A1- 2019 056 258

## Beschreibung

Die vorliegende Erfindung betrifft eine Befestigungsvorrichtung für ein Feldgerät der Prozessautomatisierung gemäß dem Oberbegriff des Patentanspruchs 1.

Aus dem Stand der Technik sind verschiedene Befestigungsvorrichtungen für Feldgeräte bekannt. In vielen Fällen wird eine Befestigung des Feldgerätes in einer Messumgebung über einen standardisierten Prozessanschluss realisiert.

Unter einem Prozessanschluss wird die mechanische Schnittstelle zur Anordnung eines Feldgeräts, bspw. eines Sensors in einer Prozessumgebung verstanden. Bekannte Prozessanschlüsse umfassen verschiede Einschraubgewinde und Flansche, mittels derer das Feldgerät in der Prozessumgebung angeordnet werden kann. Das Feldgerät wird dazu bspw. in eine Wandung eines Behältnisses, z.B. eines Tanks, Silos oder einer Rohrleitung eingeschraubt, oder mit einem daran befestigten Flansch verbunden.

Unter dem Begriff Feldgerät werden dabei verschiedene technische Einrichtungen subsummiert, die mit einem Produktionsprozess in direkter Beziehung stehen. "Feld" bezeichnet dabei den Bereich außerhalb von Leitwarten. Feldgeräte können damit insbesondere Aktoren, Sensoren und Messumformer sein.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen.

Autarke Feldgeräte zeichnen sich durch eine besonders einfache Montage ohne Anbringen einer Kommunikations- oder Versorgungsleitung aus und eröffnen dadurch besonders flexible Möglichkeiten zur Anordnung, d.h. insbesondere deren Anbringung in der Prozessumgebung. Ein autarkes Feldgerät gemäß der vorliegenden Anmeldung weist wenigstens einen Sensor zur Erfassung einer Prozessgröße sowie eine Sensorelektronik, ein Funkmodul sowie eine Energieversorgung auf.

Die von diesen Feldgeräten ermittelten Messwerte werden typischerweise unter Verwendung einer Schmalbandfunktechnologie (LoRa, Sigfox, NB-IOT) in eine Cloud, d.h. auf einen Server im World Wide Web übertragen. Typische Anwendungsszenarien für solche Feldgeräte umfassen Bereiche wie die Hochwasservorhersage, Lagerbestandsverwaltung oder auch andere dezentral verteilte Messaufgabe.

Aus dem Stand der Technik sind ferner Feldgerät der Prozessautomatisierung mit einem Metallgehäuse und einem Funkmodul mit einer Antenne bekannt.

Häufig sind solche Feldgeräte mit übergeordneten Einheiten, zum Beispiel Leitsystemen oder Steuereinheiten, verbunden. Diese übergeordneten Einheiten dienen zur Prozesssteuerung, Prozessvisualisierung und/oder Prozessüberwachung.

Häufig werden Feldgeräte mit metallischen Gehäusen aufgrund ihrer mechanischen Stabilität und Resistenz gegenüber Umwelteinflüssen eingesetzt. Bei einem Einsatz von Feldgeräten in explosionsgefährdeten Umgebungen müssen diese bestimmte Anforderungen erfüllen, die den Einsatz von metallischen Gehäusen ebenfalls erfordern. Beispielsweise darf bei der Explosionsschutzart druckfeste Kapselung (Exd) das Gehäuse eines Feldgerätes bei einem Explosionsdruck innerhalb des Gehäuses nicht bersten, was üblicherweise durch Gehäuse in Metallausführung erreicht wird. Bei der Zündschutzart druckfeste Kapselung sind die Komponenten, die eine Zündung, bspw. eines entflammbaren Gases, auslösen können, in ein Gehäuse eingebaut, das dem Explosionsdruck standhält. Die Öffnungen des Gehäuses sind so beschaffen, dass eine Übertragung der Explosion nach außen verhindert wird. Sämtliche Verschlüsse und Durchführungen des Gehäuses sind entsprechend dieser Zündschutzart auszuführen und sind daher teilweise sehr aufwändig zu gestalten.

Aus dem Stand der Technik ist es bspw. bekannt, Funkmodule zur leichteren Bedienung und Parametrierung von Feldgeräten zu verwenden. Eine Bedienung und Parametrierung über Funkmodule erleichtert dem Bedienpersonal die Arbeit vor Ort, da das Feldgerät bspw. zur Parametrierung nicht geöffnet und dafür in explosionsgefährdeten Umgebungen ggf. vollständig außer Betrieb genommen werden muss.

Eine Verwendung von Funkmodulen steht aber im Widerspruch zu Gehäusen aus Metall. Befindet sich ein Funksender/-empfänger zusammen mit der übrigen Sensorelektronik eines Feldgerätes, beispielsweise eines Füllstandsensors, innerhalb des Sensorgehäuses, so verhindern metallische Gehäusewände die Ausbreitung elektromagnetischer Wellen und damit die gewünschte Funkverbindung.

Aus dem Stand der Technik ist es daher bekannt, Metallgehäuse mit einem Glasfenster auszustatten, welches für die Ablesbarkeit eines eingebauten Displays verwendet wird und gleichzeitig auch eine Funkverbindung durch das Glasfenster hindurch erlaubt. Es wird allerdings als nachteilig empfunden, dass eine solche Funkverbindung einer starken Richtwirkung unterliegt und damit nur eingeschränkt nutzbar ist.

Ferner ist es bekannt, ein Kommunikationssignal über eine Koaxialleitung durch eine separate Kabeldurchführung durch das Gehäuse zu führen und eine dort angebrachte Außenantenne mit diesem Signal zu speisen. Hieran wird es als Nachteil empfunden, dass das Feldgerätegehäuse eine zusätzliche Kabeldurchführung benötigt und entsprechend explosionssicher ausgestaltet werden muss.

Es treten zunehmend Messaufgaben auf, bei denen es gewünscht ist, dass ein autarkes Feldgerät ohne aufwändigen Prozessanschluss unmittelbar in der Prozessumgebung angeordnet wird. Insbesondere bei Prozessgefäßen aus Metall, entstehen hierdurch Probleme für die Funkkommunikation, da das Metall des Prozessgefäßes die Ausbreitung der elektromagnetischen Wellen für die Funkverbindung unterbindet. Derzeit muss, wenn ein Feldgerät mit Funkmodul, insbesondere ein Sensor innenliegend in einem Metalltank montiert ist, eine Herausführung der Antenne angebracht werden, um die Sensordaten zu übermitteln. Der Einsatz von autarken Feldgeräten ist damit in solchen Situationen nicht möglich, oder es ist notwendig, ein Antennenkabel durch eine Kabeldurchführung aus dem Prozessgefäß heraus vorzusehen. Es werden Halterungen für den Sensor, die eine Kabeldurchführung und die Antenne selbst benötigt. Außerdem muss die Antenne über eine Leitung mit dem Sensor verbunden werden. Entsprechende Antennenanschlüsse sind aber bei autarken Feldgeräten häufig nicht vorgesehen.

Weiterer Stand der Technik ist aus der DE 10 2004 041 857 A1, US 2019/0056258 A1 und US 6 062 095 bekannt.

Es ist die Aufgabe der vorliegenden Erfindung eine Befestigungsanordnung für ein autarkes Feldgerät derart weiterzubilden, dass weiterhin eine flexible Anordnung des Feldgeräts möglich ist.

Diese Aufgabe wird durch ein Feldgerät mit den Merkmalen des Patentanspruchs 1 gelöst.

Ein erfindungsgemäßes autarkes Feldgerät der Prozessautomatisierung mit einem Sensor, einem Funkmodul und einer Befestigungsvorrichtung zur Befestigung des Feldgerätes an einer Wandung, zeichnet sich dadurch aus, dass die Befestigungsvorrichtung wenigstens zweiteilig ausgestaltet und derart ausgebildet ist, dass ein erster, sensorseitiger Teil der Befestigungsvorrichtung von einer ersten Seite der Wandung und ein zweiter Teil der Befestigungsvorrichtung von einer zweiten Seite der Wandung anordenbar ist, wobei die Teile der Befestigungsvorrichtung eine die Wandung durchdringende mechanische erste Schnittstelle ausbilden und das Feldgerät so, an der Wandung befestigbar ist.

Das erfindungsgemäße autarke Feldgerät kann damit mit seiner Befestigungsvorrichtung durch eine Öffnung in einer Wandung, bspw. eines Behälters, an dem das Feldgerät angeordnet werden soll, befestigt werden. Für die Befestigung ist der erste Teil der Befestigungsanordnung auf einer Seite der Wandung, bspw. in einem Behälterinneren, und der zweite Teil der Befestigungsanordnung auf einer gegenüberliegenden Seite der Wandung, bspw. auf der Außenseite des Behälters angeordnet. Durch die durch die Teile der Befestigungsvorrichtung ausgebildete mechanische Schnittstelle sind die beiden Teile der Befestigungsvorrichtung miteinander verbunden, sodass das Feldgerät an der Wandung befestigt ist.

Durch die Öffnung in der Wandung können Funksignale von einer Seite der Wandung auf die andere Seite der Wandung gelangen, sodass eine Funkkommunikation des Feldgerätes ermöglicht wird.

Wenigstens ein Teil der Befestigungsvorrichtung ist die Wandung wenigstens teilweise durchdringend ausgebildet. Das bedeutet, dass dieser Teil der Befestigungsvorrichtung in montiertem Zustand des Feldgerätes in einer Schnittdarstellung wenigstens abschnittsweise mit der Wandung überlappend ausgebildet ist. Vorzugsweise ragt der die Wandung durchdringende Teil bis auf die gegenüberliegende Seite der Wandung, also ragt bspw. der erste Teil der Befestigungsvorrichtung der sensorseitig angeordnet ist auf die Seite der Wandung, an der der zweite Teil der Befestigungsvorrichtung angeordnet ist.

Ist bspw. der Sensor des Feldgerätes im Inneren eines Metallbehälters, bspw. eines Metalltanks, angeordnet, so besteht durch die vorliegende Ausgestaltungsform die Möglichkeit, eine Antenne des Funkmoduls des Feldgeräts in dem die Wandung durchdringenden Teil der Befestigungsvorrichtung anzuordnen. Auf diese Weise ist die Antenne für die Funkkommunikation des Feldgeräts außerhalb des Metallbehälters, sodass eine Funkkommunikation möglich wird.

Eine besonders geschickte Ausgestaltung kann erreicht werden, wenn ein Teil des sensorseitigen Teils der Befestigungsvorrichtung wenigstens abschnittsweise als Gehäuse des Feldgerätes ausgebildet ist. Auf diese Weise kann die Befestigungsvorrichtung mit dem Gehäuse integriert, ausgestaltet, vorzugsweise einstückig ausgebildet werden.

Auf diese Weise kann neben einer einfachen Herstellung auch erreicht werden, dass keine zusätzlichen Abdichtungen zur Sicherstellung einer Dichtigkeit des Feldgeräts notwendig sind.

Die Teile der Befestigungsvorrichtung bilden ferner eine zweite Schnittstelle zur Signal- und/oder Energieübermittlung aus. Auf diese Weise ist neben einer mechanischen Verbindung der beiden Teile der Befestigungsvorrichtung auch eine Signal- und/oder Energieübermittlung möglich.

Bspw. kann auf diese Weise ein Anzeige- und/oder Bedienmodul des Feldgeräts auf der dem Sensor abgewandten Seite der Wandung, d.h. insbesondere außerhalb eines Behälters angeordnet werden. Ferner ist es so möglich, eine Energieversorgung in Form einer Batterie oder Akku, eines Energy-Harvesting-Moduls oder anderer geeigneter Mittel zur Bereitstellung von Energie für das Feldgerät, außerhalb des Behälters anzuordnen.

Eine Schnittstelle zur Signalübermittlung ermöglicht es ferner, die Antenne oder die Antenne und das Funkmodul des Feldgeräts auf der dem Sensor abgewandten Seite der Wandung, also insbesondere außerhalb des Behälters, anzuordnen. Hierdurch wird es auch ermöglicht, den zweiten Teil der Befestigungsvorrichtung austauschbar auszugestalten und so austauschbar verschiedene Funkmodule und entsprechende Antennen zur Verfügung zu stellen.

Hierfür kann vorzugsweise der zweite Teil der Befestigungsvorrichtung eine oder mehrere Antennen aufweisen. Durch die eine oder die mehreren Antennen können die Voraussetzungen für eine Funkkommunikation gemäß einem oder mehrerer Funkstandards zur Verfügung gestellt werden.

Zusätzlich oder alternativ kann der zweite Teil der Befestigungsvorrichtung eine Anzeige- und/oder Bedieneinheit aufweisen.

Der Teil der Befestigungsvorrichtung, der die Wandung durchdringt ist vorzugsweise kreiszylindrisch ausgebildet. Durch eine kreiszylindrische Ausgestaltung dieses Teils wird sowohl eine Erstellung als auch eine Abdichtung der Öffnung erleichtert. Bspw. kann die Öffnung durch eine Bohrung einfach realisiert werden. Eine kreiszylindrische Öffnung kann besonders einfach durch handelsübliche Dichtungen, bspw. O-Ringe abgedichtete werden.

Um eine einfache Montage und Demontage des Feldgerätes zu ermöglichen kann die mechanische erste Schnittstelle als Schraub-, Rast-, Bajonett- oder Steckverbindung ausgebildet sein. Die mechanische Schnittstelle ist vorzugsweise werkzeuglos betätigbar, was besonders einfach durch die vorgenannten Verbindungsarten erreicht werden kann.

Wird eine erhöhte Sicherheit gegen unbefugte Eingriffe gewünscht, so kann die mechanische erste Schnittstelle alternativ ausschließlich mit Spezialwerkzeugen betätigbar ausgestaltet sein. Dies kann durch besondere Verschraubungen mit proprietären Werkzeugeingriffen oder eine Sicherung der vorgenannten Verbindungsarten mit einer nur mit einem Spezialwerkzeug lösbaren Sicherung erfolgen.

Vorzugsweise weist der sensorseitige erste Teil der Befestigungsvorrichtung eine Dichtung auf, die durch ein Befestigen des Feldgeräts an der Wandung derart komprimiert wird, dass diese dichtend an der Wandung zur Anlage gebracht wird.

Auf diese Weise kann erreicht werden, dass die Öffnung, die für die Montage des vorliegenden Feldgeräts notwendig ist, durch die Montage des Feldgeräts abgedichtet wird.

In verschiedenen Anwendungen kann es sinnvoll sein, wenn der zweite Teil der Befestigungsvorrichtung überfahrbar ausgebildet ist.

Eine überfahrbare Ausgestaltung des zweiten Teils der Befestigungsvorrichtung ermöglicht den Einsatz des Feldgeräts bspw. in Bodentanks, wobei der zweite Teil der Befestigungsvorrichtung außerhalb des Bodentanks angeordnet sein kann. Durch eine überfahrbare Ausgestaltung kann der zweite Teil der Befestigungsvorrichtung bspw. auch in Schachtabdeckungen oder Kanaldeckeln angeordnet werden, die in Fahrwegen von Fahrzeugen liegen.

Das Feldgerät kann eine Aktivierungseinrichtung aufweisen, die derart ausgestaltet ist, dass das Feldgerät nur in an einer Wandung montiertem Zustand aktivierbar ist, vorzugsweise ist die Aktivierungseinrichtung derart ausgestaltet, dass das Feldgerät in montiertem Zustand automatisch aktiviert wird.

Auf diese Weise kann verhindert werden, dass das Feldgerät in unmontiertem Zustand aktiviert wird und Energie verbraucht. Es kann so der Energieverbrauch reduziert werden und verhindert werden, dass das Feldgerät Messwerte übermittelt, die - da es nicht korrekt montiert ist - keine Gültigkeit aufweisen.

Durch die vorliegende Erfindung ist eine Abhängigkeit von der Materialbeschaffenheit des Behälters nicht mehr relevant, da die Antenne oder das Funkmodul außerhalb des Behälters angeordnet werden kann. Aufwändige Befestigungen und Kabeldurchführungen, wie dies im Stand der Technik notwendig ist, werden nicht benötigt.

Durch die vorliegende Erfindung ist es nun möglich, Füllstandsensoren einfach und schnell an einer Messstelle, z.B. und vorzugsweise in einem metallischen Behälter anzubringen und eine ungestörte Funkverbindung zu ermöglichen. Die Abhängigkeit von speziellen Befestigungsvorrichtungen wie Flanschen oder Gewinden an der Messstelle entfällt. Eine einfache Bohrung reicht für die Montage aus.

Die Befestigungsvorrichtung, insbesondere der zweite Teil der Befestigungsvorrichtung kann baulich sehr flach ausgeführt sein und ermöglicht somit weiterhin ein Stapeln von Behältern.

Die vorliegende Erfindung wird nachfolgend anhand von Ausführungsbeispielen unter Bezugnahme auf die beigefügten Figuren eingehend erläutert. Es zeigen:
- Figur 1: eine Messanordnung zur Füllstandmessung in einem Metalltank,
- Figur 2: eine vergrößerte Darstellung eines ersten Ausführungsbeispiels einer Messanordnung gemäß der vorliegenden Anmeldung,
- Figur 3: eine vergrößerte Darstellung eines zweiten Ausführungsbeispiels einer Messanordnung gemäß der vorliegenden Anmeldung,
- Figur 4: eine vergrößerte Darstellung eines dritten Ausführungsbeispiels einer Messanordnung gemäß der vorliegenden Anmeldung,
- Figur 5: eine vergrößerte Darstellung eines vierten Ausführungsbeispiels einer Messanordnung gemäß der vorliegenden Anmeldung,

In den Figuren bezeichnen - soweit nicht anders angegeben - gleiche Bezugszeichen gleiche oder einander entsprechende Komponenten mit gleicher Funktion.

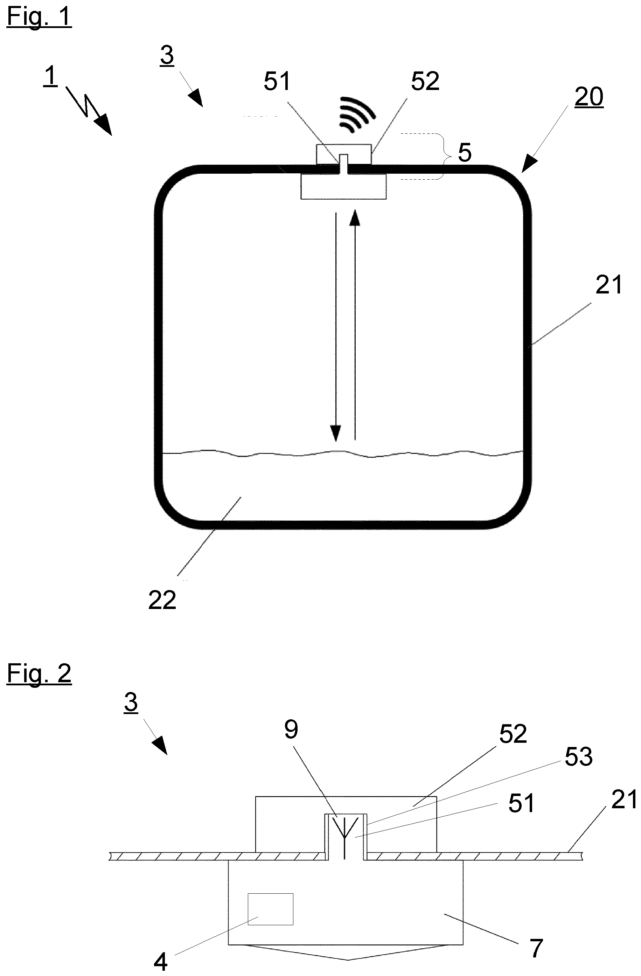

Figur 1 zeigt eine Messanordnung 1 zur Füllstandmessung in einem Metalltank mit einem autarken Feldgerät 3, das als Füllstandmessgerät ausgebildet ist, gemäß der vorliegenden Anmeldung.

Das autarke Füllstandmessgerät 3 ist im vorliegenden Ausführungsbeispiel als ein Radarfüllstandmessgerät ausgestaltet und misst den Füllstand eines Mediums 22 in einem Behälter 20. In eine Wandung 21 des Behälters 20 ist eine Bohrung eingebracht, in der das autarke Füllstandmessgerät 3 mittels einer Befestigungsvorrichtung 5 gehaltert ist. Die Befestigungsvorrichtung 5 weist hierzu einen ersten, sensorseitigen Teil 51 auf, der zusammen mit zumindest dem Radarsensor zur Füllstandmessung in dem Behälter 20 angeordnet ist.

Der Füllstandsensor ist in einem kreiszylindrischen Gehäuse 7 angeordnet, das einstückig mit dem ersten Teil 51 der Befestigungsvorrichtung 5 ausgebildet ist. Zur Ausbildung einer mechanischen Schnittstelle weist der erste Teil 51 der Befestigungsvorrichtung einen kreiszylindrisch ausgestalteten bolzenförmigen Fortsatz auf, der in der Bohrung in der Wandung 21 angeordnet ist und auf diese Weise durch die Wandung 21 ragt. Auf der dem ersten Teil 51 der Befestigungsvorrichtung 5 gegenüberliegenden Seite der Wandung 21 ist der zweite Teil 52 der Befestigungsvorrichtung 5 angeordnet und mit dem bolzenförmigen Fortsatz des ersten Teils 51 mechanisch verbunden. Die mechanische Verbindung des ersten Teils 51 und des zweiten Teils 52 kann durch verschiedene Verbindungsmechanismen realisiert sein, wobei im vorliegenden Ausführungsbeispiel ein Gewinde 53 zu mechanischen Verbindung der beiden Teile 51, 52 dient. Der bolzenförmige Fortsatz des ersten Teils 51 weist hierfür ein Außengewinde und der zweite Teil 52 ein dazu korrespondierend ausgebildetes Innengewinde auf.

Figur 2 zeigt eine vergrößerte Darstellung der Messanordnung 1 aus Figur 1.

In dem in Figur 2 dargestellten Ausführungsbeispiel ist ein Funkmodul 4 des autarken Feldgeräts 3 im sensorseitigen Teil des Feldgeräts angeordnet. Eine Antenne 9 für die Funkkommunikation des autarken Feldgeräts 3 sitzt in dem bolzenförmigen Fortsatz des ersten Teils 51 der Befestigungsvorrichtung 5 und ist damit wenigstens abschnittsweise außerhalb des Behälters 20 und damit außerhalb der metallischen Wandung 21 angeordnet. Auf diese Weise wird eine Funkkommunikation des autarken Feldgeräts 3, die innerhalb des metallischen Behälters 20 nicht möglich wäre, gewährleistet.

In Figur 2 ist ferner die als Gewinde 53 ausgebildete erste Schnittstelle zwischen dem ersten Teil 51 und dem zweiten Teil 52 der Befestigungsvorrichtung 5 deutlich zu erkennen. Es sei an dieser Stelle angemerkt, dass diese mechanische Schnittstelle nicht nur als Gewinde 53 sondern auch durch verschiedene andere mechanische Schnittstellen, beispielsweise Steckverbindungen, Bajonettverbindungen, diverse Verschraubungen oder andere Schnellkupplungen ausgebildet sein kann.

Weitere Komponenten des autarken Feldgeräts 3 wie beispielsweise ein Sensor, eine Sensorelektronik, eine Energieversorgung sowie mögliche weitere Komponenten sind der besseren Übersichtlichkeit halber in den vorliegend gezeigten Ausführungsbeispiel nicht separat dargestellt sondern werden im Sinne der vorliegenden Anmeldung als Bestandteil eines autarken Feldgeräts 3 angesehen.

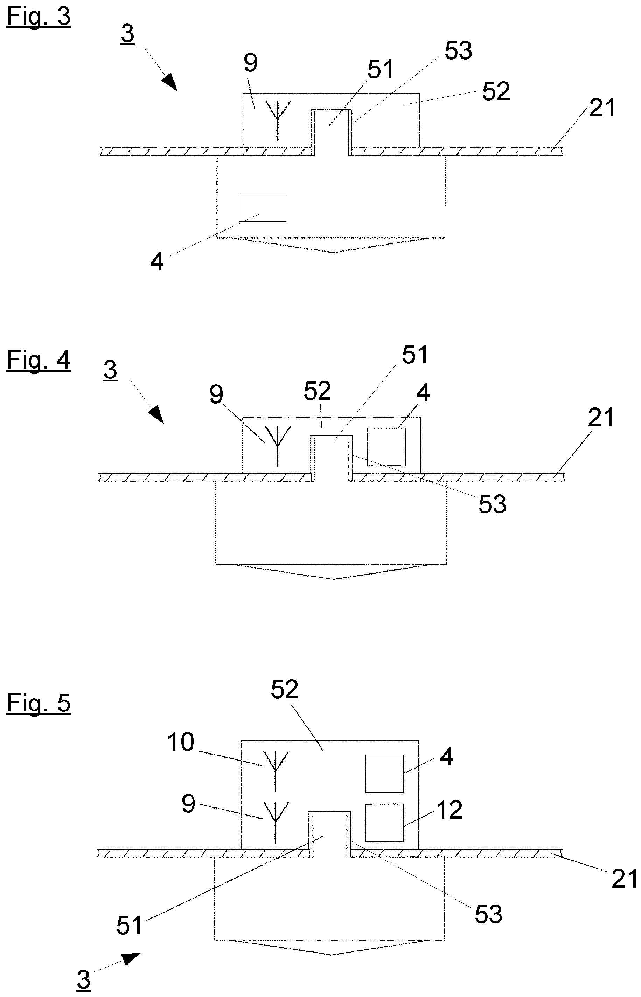

Figur 3 zeigt ein zweites Ausführungsbeispiel einer Messanordnung gemäß der vorliegenden Anmeldung.

Das in Figur 3 dargestellte Ausführungsbeispiel unterscheidet sich von dem Ausführungsbeispiel der Figur 2 dadurch, dass zusätzlich zu der ersten, mechanischen Schnittstelle zwischen dem ersten Teil 51 und dem zweiten Teil 52, die auch hier durch ein Gewinde 53 realisiert ist, eine zweite, elektronische Schnittstelle zur Signalübertragung zwischen dem Funkmodul 4 des autarken Feldgeräts 3 und der Antenne 9, die im vorliegenden Ausführungsbeispiel im zweiten Teil 52 der Befestigungsvorrichtung 5 angeordnet ist, ausgebildet ist. Die zweite Schnittstelle zur Signalübertragung ist derart mit der mechanischen Schnittstelle kombiniert, dass weiterhin eine einfache und bevorzugt werkzeuglose Verbindung des ersten Teils 51 und des zweiten Teils 52 realisiert werden kann. Gleichzeitig ist aber eine Signalübertragung zwischen dem Funkmodul 4 und der Antenne 9 gewährleistet, sodass durch die außerhalb des Behälters 20 angeordnete Antenne 9 eine Funkkommunikation des autarken Feldgeräts 3 gewährleistet ist.

In dem in Figur 4 dargestellten dritten Ausführungsbeispiel ist sowohl das Funkmodul 4 als auch die Antenne 9 in dem zweiten Teil 52 der Befestigungsvorrichtung 5 angeordnet. Auch in diesem Ausführungsbeispiel ist zwischen dem ersten Teil 51 und dem zweiten Teil 52 sowohl eine mechanische Schnittstelle als auch eine elektronische Schnittstelle zur Signalübertragung ausgebildet. Da in dem vorliegenden Ausführungsbeispiel aber das Funkmodul 4 und die Antenne 9 beide in dem zweiten Teil 52 der Befestigungsvorrichtung fünf angeordnet sind kann die zugrundeliegende Funktechnologie durch ein einfaches austauschen des zweiten Teils 52 durch ein anderes Teil mit einem Funkmodul mit einer entsprechend angepassten Antenne für einen anderen Funkstandard erreicht werden.

Es ist auf diese Weise möglich, ein vorhandenes Feldgerät je nach lokalen Gegebenheiten an unterschiedliche Funkstandards anzupassen oder bei Weiterentwicklungen der zugrunde liegenden Funkstandards auch ein installiertes Feldgerät 3 mit einem neuen Funkmodul auszustatten.

In Figur 5 ist ein viertes Ausführungsbeispiel einer Messanordnung 1 gemäß der vorliegenden Anmeldung gezeigt.

In dem in Figur 5 dargestellten Ausführungsbeispiel sind in dem zweiten Teil 52 der Befestigungsvorrichtung 5 Funkmodule 4, 12 sowie zwei zugeordnete Antennen 9, 10 angeordnet. Auf diese Weise kann ein Feldgerät 3 auch mit unterschiedlichen Funkstandards, von denen beispielsweise einer zur Kommunikation mit einem mobilen Bediengerät und der andere zur Übermittlung von Messwerten in eine Cloud dienen kann, ausgestattet werden. Beispielsweise kann das Feldgerät 3 mit dem mobilen Bediengerät gemäß dem Bluetooth Low Energy Standard kommunizieren und die Messwertübermittlung kann unter Verwendung einer Schmalband Funktechnologie, beispielsweise LoRa, Sigfox oder NB-IoT erfolgen.

Es sei an dieser Stelle angemerkt, dass in dem zweiten Teil 52 des Feldgeräts 3 auch verschiedene andere Komponenten eines autarken Feldgeräts 3 angeordnet sein können. Insbesondere seien an dieser Stelle die Energieversorgung sowie Anzeige- und/oder Bedienelemente genannt. Für eine Energieversorgung ist es von Vorteil, dass der zweite Teil 52 der Befestigungsvorrichtung 5 in der Regel von Außen her ohne ein Öffnen des Behälters 20 zugänglich ist, sodass ohne eine Demontage des Feldgeräts 3 beispielsweise ein Batteriewechsel vorgenommen werden kann. Ferner können außerhalb des Behälters auch verschiedene andere Energiequellen zur Versorgung des Feldgeräts 3 genutzt werden. Beispielhaft seien hierfür Energy-Harvesting-Module genannt.

### Bezugszeichen

- 1: Messanordnung
- 3: autarkes Feldgerät
- 4: Funkmodul
- 5: Befestigungsvorrichtung
- 7: Gehäuse
- 9: Antenne

- 10: zweite Antenne
- 12: zweites Funkmodul

- 20: Behälter
- 21: Wandung
- 22: Medium

- 51: erster Teil
- 52: zweiter Teil
- 53: Gewinde

## Patentansprüche

1. Autarkes Feldgerät (3) der Prozessautomatisierung mit einem Sensor, einem Funkmodul (4) und einer Befestigungsvorrichtung (5) zur Befestigung des Feldgerätes an einer Wandung (21),
**dadurch gekennzeichnet, dass**
die Befestigungsvorrichtung (5) wenigstens zweiteilig ausgestaltet und derart ausgebildet ist, dass ein erster, sensorseitiger Teil (51) der Befestigungsvorrichtung (5) von einer ersten Seite der Wandung (21) und ein zweiter Teil (52) der Befestigungsvorrichtung (5) von einer zweiten Seite der Wandung (21) montierbar ist, wobei die Teile (51, 52) der Befestigungsvorrichtung (5) eine die Wandung (21) durchdringende mechanische erste Schnittstelle ausbilden und das Feldgerät (3) so an der Wandung (21) befestigbar ist, wobei wenigstens ein Teil der Befestigungsvorrichtung (5) die Wandung (21) durchdringend ausgebildet ist, wobei der erste Teil (51) zur Ausbildung der mechanischen Schnittstelle einen kreiszylindrisch ausgestalteten bolzenförmigen Fortsatz aufweist, wobei auf der dem ersten Teil (51) der Befestigungsvorrichtung (5) gegenüberliegenden Seite der Wandung (21) der zweite Teil (52) der Befestigungsvorrichtung (5) angeordnet und mit dem bolzenförmigen Fortsatz des ersten Teils (51) mechanisch verbindbar ist, wobei
die Teile (51, 52) der Befestigungsvorrichtung (5) eine zweite Schnittstelle zur Signal- und/oder Energieübermittlung ausbilden.

2. Autarkes Feldgerät (3) gemäß Anspruch 1,
**dadurch gekennzeichnet, dass**
ein Teil des ersten Teils (51) der Befestigungsvorrichtung (5) wenigstens abschnittsweise als Gehäuse des Feldgerätes (3) ausgebildet ist.

3. Autarkes Feldgerät (3) gemäß einem der vorhergehenden Ansprüche,
**dadurch gekennzeichnet, dass**
der zweite Teil (52) der Befestigungsvorrichtung (5) eine Antenne (9) aufweist.

4. Autarkes Feldgerät (3) gemäß einem der vorhergehenden Ansprüche,
**dadurch gekennzeichnet, dass**
der zweite Teil (52) der Befestigungsvorrichtung (5) eine Anzeige- und/oder Bedieneinheit aufweist.

5. Autarkes Feldgerät (3) gemäß einem der vorhergehenden Ansprüche,
**dadurch gekennzeichnet, dass**
die erste Schnittstelle (53) als Schraub-, Rast- Bajonett- oder Steckverbindung ausgebildet ist.

6. Autarkes Feldgerät (3) gemäß einem der vorhergehenden Ansprüche,
**dadurch gekennzeichnet, dass**
die erste Schnittstelle (53) werkzeuglos betätigbar ist.

7. Autarkes Feldgerät (3) gemäß einem der Ansprüche 1 bis 5,
**dadurch gekennzeichnet, dass**
die erste Schnittstelle (53) ausschließlich mit Spezialwerkzeugen betätigbar ist.

8. Autarkes Feldgerät (3) gemäß einem der vorhergehenden Ansprüche,
**dadurch gekennzeichnet, dass**
der erste Teil (51) der Befestigungsvorrichtung (5) eine Dichtung aufweist, die durch ein Befestigen des Feldgeräts (3) an der Wandung (21) derart komprimiert wird, dass diese dichtend an der Wandung (21) zur Anlage gebracht wird.

9. Autarkes Feldgerät (3) gemäß einem der vorhergehenden Ansprüche,
**gekennzeichnet durch**
eine Aktivierungseinrichtung, die derart ausgestaltet ist, dass das Feldgerät (3) nur in an einer Wandung (21) montiertem Zustand aktivierbar ist.

10. Autarkes Feldgerät (3) gemäß Anspruch 9,
**dadurch gekennzeichnet, dass**
die Aktivierungseinrichtung derart ausgestaltet ist, dass das Feldgerät (3) in montiertem Zustand automatisch aktiviert wird.

11. Autarkes Feldgerät (3) nach Anspruch 1, wobei die Befestigungsvorrichtung (5) als modulares Set ausgebildet ist bestehend aus einem ersten Teil (51) und mehreren zweiten Teilen (52) mit jeweils unterschiedlichen Funkmodulen (4) zur Implementierung unterschiedlicher Funkstandards.

## Claims

1. Autonomous field device (3) for process automation having a sensor, a wireless module (4) and a fastening device (5) for fastening the field device on a wall (21),
**characterized in that**
the fastening device (5) has at least a two-part design and is formed such that a first, sensor-side part (51) of the fastening device (5) can be installed from a first side of the wall (21) and a second part (52) of the fastening device (5) can be installed from a second side of the wall (21), wherein the parts (51, 52) of the fastening device (5) form a mechanical first interface penetrating the wall (21) in order to fasten the field device (3) on the wall (21) in this manner, wherein at least one part of the fastening device (5) is designed to penetrate the wall (21), wherein the first part (51) has a bolt-shaped extension of circular cylindrical design to form the mechanical interface, wherein the second part (52) of the fastening device (5) is arranged on the side of the wall (21) opposite the first part (51) of the fastening device (5) and can be mechanically connected to the bolt-shaped extension of the first part (51), wherein
the parts (51, 52) of the fastening device (5) form a second interface for signal and/or energy transmission.

2. Autonomous field device (3) according to claim 1,
**characterized in that**
a part of the first part (51) of the fastening device (5) is ) is at least sectionally formed as a housing of the field device (3).

3. Autonomous field device (3) according to one of the preceding claims,
**characterized in that**
the second part (52) of the attachment device (5) has an antenna (9).

4. Autonomous field device (3) according to one of the preceding claims,
**characterized in that**
the second part (52) of the fastening device (5) comprises a display and/or operator unit.

5. Autonomous field device (3) according to one of the preceding claims,
**characterized in**
the first interface (51) is formed as a threaded, snap, bayonet, or socket connection.

6. Autonomous field device (3) according to one of the preceding claims,
**characterized in that**
the first interface (51) can be operated without tools.

7. Autonomous field device (3) according to one of claims 1 to 5,
**characterized in that**
the first interface (51) can be exclusively operated with special-purpose tools.

8. Autonomous field device (3) according to one of the preceding claims,
**characterized in that**
the first part (51) of the fastening device (5) comprises a gasket that is compressed against the wall (21) by fastening the field device (3) such that said gasket is brought into contact with the wall (21) to form a seal.

9. Autonomous field device (3) according to one of the preceding claims,
**characterized by**
an activation device which is designed such that the field device (3) can only be activated in a state installed on a wall (21).

10. Autonomous field device (3) according to claim 9,
**characterized in that**
the activation device is designed in such a way that the field device (3) is automatically activated in the installed state.

11. Modular set consisting of a first part (51) and several second parts (52), each with different radio modules (4) for implementing different wireless standards.

## Revendications

1. Appareil de terrain (3) autonome d'automatisation de processus avec un capteur, un module radio (4) et un dispositif de fixation (5) pour la fixation de l'appareil de terrain sur une paroi (21),
**caractérisé en ce que**
le dispositif de fixation (5) est conçu et réalisé en au moins deux parties, qu'une première partie (51) côté capteur du dispositif de fixation (5) peut être montée depuis un premier côté de la paroi (21) et une deuxième partie (52) du dispositif de fixation (5) peut être montée depuis un deuxième côté de la paroi (21), dans lequel les parties (51, 52) du dispositif de fixation (5) constituent une première interface mécanique traversant la paroi (21) et l'appareil de terrain (3) peut ainsi être fixé sur la paroi (21), dans lequel au moins une partie du dispositif de fixation (5) est réalisée de manière à traverser la paroi (21), dans lequel la première partie (51) présente pour la réalisation de l'interface mécanique un prolongement en forme de boulon de forme cylindrique circulaire, dans lequel la deuxième partie (52) du dispositif de fixation (5) est disposée sur le côté de la paroi (21) opposé à la première partie (51) du dispositif de fixation (5) et peut être reliée mécaniquement au prolongement en forme de boulon de la première partie (51), dans lequel
les parties (51, 52) du dispositif de fixation (5) réalisent une deuxième interface pour la transmission de signal et/ou d'énergie.

2. Appareil de terrain (3) autonome selon la revendication 1, **caractérisé en ce qu'**une partie de la première partie (51) du dispositif de fixation (5) est réalisée au moins par endroits en tant que boîtier de l'appareil de terrain (3).

3. Appareil de terrain (3) autonome selon l'une quelconque des revendications précédentes, **caractérisé en ce que** la deuxième partie (52) du dispositif de fixation (5) présente une antenne (9).

4. Appareil de terrain (3) autonome selon l'une quelconque des revendications précédentes, **caractérisé en ce que** la deuxième partie (52) du dispositif de fixation (5) présente une unité d'affichage et/ou de commande.

5. Appareil de terrain (3) autonome selon l'une quelconque des revendications précédentes, **caractérisé en ce que** la première interface (53) est réalisée sous la forme d'une connexion par vissage, par encliquetage, à baïonnette ou enfichable.

6. Appareil de terrain (3) autonome selon l'une quelconque des revendications précédentes, **caractérisé en ce que** la première interface (53) peut être actionnée sans outil.

7. Appareil de terrain (3) autonome selon l'une quelconque des revendications 1 à 5, **caractérisé en ce que** la première interface (53) peut être actionnée exclusivement avec des outils spéciaux.

8. Appareil de terrain (3) autonome selon l'une quelconque des revendications précédentes, **caractérisé en ce que** la première partie (51) du dispositif de fixation (5) présente un joint d'étanchéité qui est comprimé par une fixation de l'appareil de terrain (3) sur la paroi (21) de manière à ce qu'il est mis en appui de manière étanche sur la paroi (21).

9. Appareil de terrain (3) autonome selon l'une quelconque des revendications précédentes, **caractérisé par** un système d'activation qui est configuré de telle manière que l'appareil de terrain (3) ne peut être activé que dans l'état monté sur une paroi (21).

10. Appareil de terrain (3) autonome selon la revendication 9, **caractérisé en ce que** le système d'activation est configuré de telle manière que l'appareil de terrain (3) est automatiquement activé dans l'état monté.

11. Appareil de terrain (3) autonome selon la revendication 1, dans lequel le dispositif de fixation (5) est réalisé comme un ensemble modulaire comprenant une première partie (51) et plusieurs deuxièmes parties (52) avec chacune des modules radio (4) différents pour mettre en œuvre des normes radio différentes.
